# EUROPÄISCHE PATENTANMELDUNG

(11) **EP 0 931 982 A2**
(43) Veröffentlichungstag der Anmeldung: **28.07.1999**
(21) Anmeldenummer: 99100807.9
(22) Anmeldetag: 18.01.1999
(51) Int. Cl.: F23J 13/04

(54) **Kamin-Rauchrohr aus Muffenrohrabschnitten und deren Abdichtung**

(30) Priorität: 23.01.1998 DE 29801063 U
(71) Anmelder: ERLUS BAUSTOFFWERKE AG, 84086 Neufahrn (DE)
(72) Erfinder: Interwies, Jan, 84034 Landshut (DE); Weigl, Franz, 84069 Schierling (DE)
(74) Vertreter: Lohrentz, Franz, Dipl.-Ing.

(57) **Zusammenfassung**

Rauchrohr eines Kamins, das aus insbesondere keramischen Muffenrohr-Abschnitten (1,1') aufgebaut ist und bei dem die Verbindungsstelle von jeweils zwei aufeinander folgenden Muffenrohr-Abschnitten durch eine Lippendichtung (10,10') aus einem elastomeren Material abgedichtet ist. Die Lippendichtung weist einen die Muffe außen umgreifenden Trägerkörper (11,11') auf, der an einem über den oberen Muffenrand axial überstehenden Abschnitt (13) mindestens eine an der Außenfläche des Spitzendes (3) anliegende Dichtlippe (22) trägt.

## Beschreibung

Die Erfindung betrifft ein Rauchrohr eines Kamins, das aus insbesondere keramischen Muffenrohr-Abschnitten aufgebaut ist und bei dem die Verbindungsstelle von jeweils zwei aufeinanderfolgenden Muffenrohr-Abschnitten durch eine Lippendichtung aus einem elastomeren Material abgedichtet ist.

Bei einem bekannten Rauchrohr der vorstehend angegebenen Art (DE 297 09 874 U) ist die jeweilige Verbindungsstelle zwischen zwei aufeinanderfolgenden Muffenrohr-Abschnitten durch Dichtungen unterschiedlicher Art abgedichtet, nämlich in der Fuge zwischen dem Muffengrund und dem Stirnrand des nächstfolgenden Rohrabschnitts durch einen Dichtring aus wärmebeständigem Fasermaterial und in dem axialen Ringspalt zwischen der Innenwand der Muffe und dem Endabschnitt (Spitzende) des nächstfolgenden Muffenrohr-Abschnitts durch eine Lippendichtung mit mindestens einer den Ringspalt überbrückenden und an der Außenfläche des Spitzendes anliegenden Dichtlippe. Da der Dichtring aus einem wärmebeständigen Fasermaterial besteht, hält er an der thermisch stärker belasteten Stelle im Muffengrund den auftretenden Wärmebelastungen stand. Da ein Hindurchtreten heißer Rauchgase an dem Dichtring weitgehend ausgeschlossen ist, kann für die Lippendichtung in dem axialen Ringspalt ein elastomeres Material eingesetzt werden, das den Wärmebelastungen bis zu 500° C standhalten kann.

Bei einem anderen bekannten Rauchrohr (DE 44 43 603 A1) ist die jeweilige Verbindungsstelle zwischen zwei aufeinanderfolgenden Muffenrohr-Abschnitten ebenfalls durch Dichtungen unterschiedlicher Art abgedichtet. Hierbei ist in der Fuge zwischen dem Muffengrund und dem Stirnrand des Spitzendes Fugenkitt vorgesehen und in dem axialen Ringspalt zwischen der Innenwand der Muffe und dem Spitzende ist ein Dichtring aus elastomerem Material angeordnet. Auch bei dieser Ausgestaltung der Verbindungsstelle schirmt der Fugenkitt auf dem Muffengrund den Dichtring aus elastomerem Material von den zu erwartenden Wärmebelastungen ab.

Die Ausbildung einer von der elastomeren Lippen- bzw. Ringdichtung gesonderten Dichtung auf dem Muffengrund bedeutet einen zusätzlichen Aufwand. Dieser fällt vor allem dann störend ins Gewicht, wenn der Dichtring erst bei der Arbeit vor Ort auf den Muffengrund aufgelegt werden muß oder, wie dies bei der weiteren geschilderten Lösung zwingend der Fall ist, bei der Erstellung des Rauchrohrs der Fugenkitt auf dem Muffengrund oder an dem Spitzende aufgetragen werden muß. Bei beiden bekannten Lösungen kommt hinzu, daß infolge der Anordnung der elastomeren Dichtung in dem axialen Ringspalt die herstellungsbedingten Schwankungen der Querschnittabmessungen von Muffe und Spitzende entweder in Grenzen gehalten oder Rohrabschnitte passend einander zugeordnet werden müssen, um zu vermeiden, daß der axiale Ringspalt für die Anordnung der elastomeren Dichtung darin zu eng ist, das heißt ein Einfügen des Spitzendes in die Muffe ohne die Gefahr des Ausbrechens der Muffenwand nicht möglich ist.

Weiterhin ist auch ein als Dichtung wirkendes Verbindungsstück aus einem Elastomer für Rohre mit unterschiedlichen Außendurchmessern bekannt, das mittels einer Spannschelle an dem Ende eines Rohrs abgedichtet befestigt werden kann und an seinem anderen Ende im Inneren zwei in axialer Richtung distanzierte ringförmige Dichtlippen aufweist, die sich an der Außenseite eines in das Verbindungsstück einzuschiebenden anderen Rohrendes dichtend anlegen (DE 89 09 972 U). Die Notwendigkeit, das eine Ende des Verbindungsstücks an dem zugeordneten Rohrende mittels einer Spannschelle zu befestigen, erhöht den Arbeitsaufwand beim Aufbau eines aus entsprechenden Rohrabschnitten zusammengesetzten Rohrs noch stärker als das Anbringen der vorstehend geschilderten gesonderten Dichtung. Darüberhinaus muß das Anbringen und Anziehen der Spannschelle insbesondere bei dünnwandigen Rohren mit Sorgfalt erfolgen, weil leicht bei einem zu starken Spannen der Spannschelle die Rohrwandung brechen kann.

Aufgabe der vorliegenden Erfindung ist es daher, ein Rauchrohr der eingangs genannten Art, insbesondere eine Abdichtung für die Verbindungsstelle zwischen zwei aufeinanderfolgenden Muffenrohr-Abschnitten vorzuschlagen, die einen geringeren Herstellungsaufwand mit sich bringen, ohne daß bezüglich der Stabilität des Rauchrohrs und/oder hinsichtlich der Abdichtfunktion Einbußen hingenommen werden müssen.

Erfindungsgemäß wird diese Aufgabe gelöst durch die Ausgestaltung gemäß dem Anspruch 1.

Es hat sich gezeigt, daß die Anordnung einer zusätzlichen wärmebeständigen Dichtung im Muffengrund zu dem Zweck, die elastomere Lippendichtung vor übermäßiger Wärmebelastung zu schützen, nicht erforderlich ist oder deren Notwendigkeit auf erheblich höhere Rauchrohrtemperaturen hinausgeschoben werden kann, wenn erfindungsgemäß die Lippendichtung aus dem axialen Ringspalt zwischen der Muffeninnenwand und dem Spitzende hinaus in den Spitzendebereich oberhalb des oberen Muffenrands gelegt wird. Dadurch, daß der zylindrische Trägerkörper für die einfach oder mehrfach vorgesehene Dichtlippe an der Muffenaußenwand festgelegt ist und mit dem die Dichtlippe tragenden Abschnitt über den oberen Muffenrand hinausragt, liegt die Muffeninnenwand über ihre ganze Länge bzw. Höhe frei. Hierdurch kommt eventuell zwischen Muffengrund und Stirnrand des Spitzendes hindurchtretendes heißes Rauchgas mit der Muffeninnenwand in Berührung, die infolge der Kühlung der Muffe von außen stets eine verhältnismäßig niedrige Temperatur hat. Daher wird dieses Rauchgas bis zum Erreichen des oberen Muffenrands hinreichend abgekühlt, so daß eine kritische Temperatur der darüber befindlichen Lippendichtung nicht überschritten wird. Auch die von der Wandung des Spitzendes radial auf die Muffeninnenwand ausgesandte Wärmestrahlung führt nicht zu einer ins Gewicht fallenden Temperaturerhöhung der Muffe, da diese stets von außen zumindest teilflächig mit der kühlen Umgebungsluft in Berührung ist. Deshalb kann insgesamt das Spitzende innerhalb der Muffe und auch darüber relativ kühl gehalten werden.

Da die Breite des axialen Ringspalts in der Muffe für die Anordnung der Lippendichtung darin nicht mehr in Betracht gezogen werden muß, können bei der Erstellung des Rauchrohrs aus den Muffenrohr-Abschnitten auch größere Herstellungstoleranzen hingenommen werden. Im Ergebnis sind daher auch Muffenrohr-Abschnitte brauchbar, die bisher bei Anordnung der elastomeren Dichtungen in dem Ringspalt selbst entweder hätten nicht oder nur nach sorgfältiger gegenseitiger Abstimmung eingesetzt werden können.

Der zylindrische Trägerkörper der Lippendichtung ist im Normalfall auf der Außenfläche der Muffe durch Reibschluß so festgelegt, daß er hierdurch den Ringspalt abdichtet. Hierzu ist die Querabmessung des Trägerkörpers auf diejenige der Muffe entsprechend abgestimmt, so daß ein Aufdrücken des Trägerkörpers auf die Muffe für einen straffen Sitz sorgt. Diese Art der Befestigung der Lippendichtung erfordert eine gewisse Biegesteifigkeit des Trägerkörpers, um das Aufdrücken praktikabel zu gestalten und zugleich eine dichtende Anlage an der Außenwand der Muffe zu erzielen. Bei Auswahl eines entsprechend elastisch leicht verformbaren Werkstoffes, z. B. Silikonkautschuk, ist es dagegen auch möglich, den für die Befestigung dienenden Abschnitt des Trägerkörpers in nach außen umgestülpter Form am oberen Muffenrand anzusetzen und dann auf die Muffenaußenwand aufzurollen. Hierdurch liegt dieser Teil des Trägerkörpers nach dem Aufrollen unter der durch die Elastizität des Werkstoffs erzeugten Spannung an der Muffenaußenwand dichtend an. Es kann weiterhin daran gedacht sein, an der Innenwand des Trägerkörpers elastisch nachgiebige Stützrippen vorzusehen, die sich beim Aufstecken oder Aufdrücken des Trägerkörpers auf die Muffe mehr oder weniger elastisch verformen und zugleich Abdichtfunktion ausüben. Hierdurch kann den fertigungsbedingten Abmessungsschwankungen der Muffe Rechnung getragen werden.

Der Trägerkörper kann auch mit einem von seiner Innenwand radial vorspringenden Stützsteg versehen sein, der im Gebrauchszustand der Lippendichtung am oberen Muffenrand dichtend anliegt und zugleich zur Positionierung der Lippendichtung oder als Anschlag bei deren Aufdrücken oder Aufschieben auf die Muffe dient. Sofern ein derartiger abdichtender Stützsteg vorgesehen ist, besteht für die Gestaltung des der Befestigung dienenden Abschnitts des Trägerkörpers eine größere Freiheit, das heißt dieser Abschnitt muß keine Abdichtfunktion mehr ausüben. Daher kann dieser Befestigungsabschnitt dann mit Durchbrüchen versehen sein, in denen die Muffenaußenwand freiliegt und der Kühlung durch die Umgebungsluft stärker ausgesetzt ist.

In einer weiteren Ausführungsform kann der Trägerkörper entweder zusätzlich zu dem Kraftschluß mit der Muffenaußenfläche oder ohne einen solchen durch eine elastische Schnappverbindung mit der Muffe verbunden sein.

Hierzu ist vorgesehen, daß der Trägerkörper an seinem unteren Rand zumindest örtlich radial nach innen gerichtete elastisch verformbare Vorsprünge trägt, die nach dem Aufstecken des Trägerkörpers auf die Muffe deren einspringende Unterfläche untergreifen. Die Muffe kann danach nur nach Überwindung der für das Ausbiegen der elastischen Vorsprünge erforderlichen Federkraft abgezogen werden. Auf diese Weise ist auch eine Sicherheit dagegen gewährleistet, daß bei einem Ablassen eines aus den Muffenrohr-Abschnitten zusammengesteckten Rauchrohrs im Zuge einer Altbau-Sanierung Lippendichtungen beim Anstoßen an die Kaminmantel-Innenwand von der jeweiligen Muffe abgestreift werden.

Neben den vorstehend geschilderten Ausführungen der Lippendichtung als gesondertes und nachträglich auf die Muffe aufzubringendes Bauteil besteht eine Befestigungsmöglichkeit auch darin, die Lippendichtung unmittelbar an einen Muffenrohr-Abschnitt anzuformen, z. B. in einem Gießverfahren. Hierbei verbindet sich der Befestigungsteil des Trägerkörpers der Lippendichtung unmittelbar durch dessen Herstellprozeß innig und daher dicht mit der Muffenrohraußenwand. Infolge der daraus resultierenden erheblich erhöhten Haftung an der Muffe kann der Befestigungsabschnitt des Trägerkörpers wesentlich kürzer gehalten werden und der Materialverbrauch ist dadurch geringer.

Ausführungsbeispiele der Erfindung sind nachfolgend anhand der beiliegenden Zeichnungen näher erläutert. In den Zeichnungen zeigen:
Fig. 1 einen axialen Halbschnitt im Bereich der Verbindungsstelle zwischen zwei Muffenrohr-Abschnitten mit einer ersten Ausführungsform der erfindungsgemäßen Lippendichtung, und
Fig. 2 einen zu Fig. 1 analogen, jedoch spiegelbildlich angeordneten Halbschnitt mit einer zweiten Ausführungsform der erfindungsgemäßen Lippendichtung.

Jeder der beiden nur teilweise gezeigten Muffenrohrabschnitte 1 bzw. 1' weist an seinem - im montierten Zustand des Rauchrohrs - oberen Ende eine Muffe 2 bzw. 2' auf, in welche das Spitzende 3 bzw. 3' des nächst oberen Muffenrohr-Abschnitts 1 bzw. 1' eingefügt ist. Das Spitzende 3, 3' steht im zusammengefügten Zustand der Muffenrohr-Abschnitte 1, 1' direkt auf dem Muffengrund 4 bzw. 4' auf. Aufgrund von Fertigungstoleranzen stellt sich zwischen dem Spitzende 3, 3' und der Muffeninnenwand 5, 5' ein in seiner Breite schwankender Ringspalt 6, 6' ein.

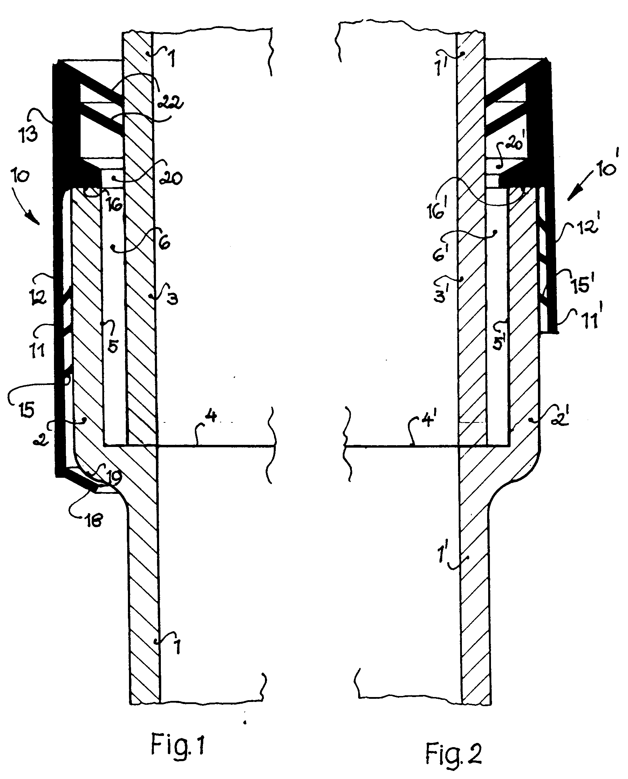

Gemäß Fig. 1 ist zur gasdichten Abdichtung der Verbindungsstelle und insbesondere des axialen Ringspalts 6 eine im ganzen mit 10 bezeichnete Lippendichtung vorgesehen. Die Lippendichtung 10 besteht im wesentlichen aus einem zylindrischen Trägerkörper 11 aus einem elastomeren Kunststoffmaterial, z. B. Silikonkautschuk, der einen unteren Befestigungsabschnitt 12 und einen an diesen oben angrenzenden Abschnitt 13 aufweist. Der Befestigungsabschnitt 12 ist verhältnismäßig dünnwandig mit einer Wanddicke von beispielsweise 2 mm und trägt auf seiner Innenseite eine Anzahl (hier drei) von ringförmig umlaufenden Stützrippen 15. Die Stützrippen 15 sind im unverformten Zustand, d. h. vor dem Aufstecken der Lippendichtung 10 auf die Muffe 2 radial gerichtet, im gezeigten Betriebszustand aber zu dem oberen Muffenrand 16 hin geneigt, so daß sie dichtend an der Muffenaußenwand anliegen und sich nach Art eines Widerhakens gegen ein Abziehen der Lippendichtung 10 von der Muffe 2 an deren Außenwand einspreizen können. Am unteren Rand des Befestigungsabschnitts 12 ist ein schräg radial nach innen vorspringender umlaufender Halterand 18 vorgesehen, der die einspringende Unterfläche 19 der Muffe 2 nach Art eines Formschlusses untergreift.

Am oberen Ende des Befestigungsabschnitts 12 ist ein auf dem oberen Muffenrand 16 dichtend aufliegender umlaufender und radial nach innen vorspringender Steg 20 ausgebildet, an den sich der Abschnitt 13 mit größerer Wandstärke (z.B. 5 mm) anschließt. Der Steg 20 übt zusätzlich zu den Stützrippen 15 eine Abdichtfunktion in Bezug auf den Ringspalt 6 aus, da er aufgrund der elastischen Nachgiebigkeit des Materials sowohl örtlich an seiner Unterseite komprimiert wird als auch durch das Aufdrücken auf den oberen Muffenrand im Betriebszustand nach oben gebogen sein kann. Durch das Einspreizen der Stützrippen 15 wird dieser Betriebszustand aufrecht erhalten. Von der Innenfläche des Abschnitts 13 springen zwei zueinander parallel verlaufende, schräg zum Muffengrund 4 geneigte Dichtlippen 22 vor, deren Ränder an der Außenfläche des Spitzendes 3 dichtend anliegen. Die Neigung der Dichtlippen 22 zum Muffengrund 4 hin ist konstruktiv von vornherein festgelegt und wird je nach der Andrückkraft zwischen Spitzende 3 und Lippenrand im zusammengefügten Zustand der Muffenrohr-Abschnitte noch verstärkt. Dadurch stellt sich zwischen den Rändern der Dichtlippen 22 und der Außenfläche des Spitzendes 3 ein mehr oder weniger ausgedehnter flächiger Dichtkontakt ein.

Die Lippendichtung 10 kann dadurch an der Muffe 2 befestigt werden, daß sie auf diese kräftig aufgedrückt wird, wobei sich der Halterand 18 zunächst nach oben einstülpt, jedoch nach Erreichen der Unterfläche 19 der Muffe 2 nach Art einer elastischen Schnappverbindung wieder radial nach innen vorspringt. Bei dem Aufsteckvorgang kommen die Stützrippen 15 mit der Außenfläche der Muffe 2 in Kraftschluß, der je nach dem Abmessungsunterschied der Stützrippen 15 und der Muffe 2 mehr oder weniger stark ausgeprägt ist. Der Aufschiebevorgang wird im gezeigten Ausführungsbeispiel durch das Auftreffen des Stützstegs 20 auf dem oberen Muffenrand 16 begrenzt. Jeder Muffenrohr-Abschnitt 1 kann entweder von vornherein, d. h. bei dem Verlassen des Werks, die Lippendichtung 10 tragen oder diese wird erst bei der Erstellung des Rauchrohrs auf der Baustelle aufgesteckt.

Im Zuge des Einfügens des nächstoberen Muffenrohr-Abschnitts 1 in die mit der Lippendichtung 10 versehene Muffe 2 drückt das Spitzende 3 mit dem Stirnrand auf die Oberseiten und/oder die freien Dichtränder der Dichtlippen 22, so daß diese elastisch nach unten gedrückt werden und in einen flächigen Dichtkontakt mit der Außenfläche des Spitzendes gelangen. Die Dichtlippen 22 weisen aufgrund ihrer - im Vergleich zu den Stützrippen 15 - wesentlich größeren radialen Erstreckung eine entsprechend größere Dicke und daher größere Steifigkeit auf, die gewährleistet, daß der jeweils obere Muffenrohr-Abschnitt 1 seitlich stabilisiert gehalten wird. Diese seitliche Stützwirkung wird durch den Stützsteg 20 und die kräftige Ausbildung des Abschnitts 13 des Trägerkörpers 11, die das Spitzende 3 umschließen, unterstützt. Sollte es im Betrieb des Kamins durch seitliche Auslenkung der Muffenrohr-Abschnitte 1 gegeneinander oder durch von vornherein vorhandene Rauhigkeit auf dem Muffengrund 4 und/oder an dem Stirnrand des Spitzendes 3 zu einem Austreten von heißem Rauchgas in den axialen Ringspalt 6 kommen, so steigt dieses längs der Muffenrohr-Innenwand 5 auf und kühlt sich dabei ab. Eine weitere Abkühlung erfährt dieses Rauchgas auch noch nach Verlassen des Ringraums 5 in dem Bereich des Abschnitts 13, bevor es an die Abdichtstelle der Dichtlippen 22 gelangt. Zu diesem Zeitpunkt ist das Rauchgas bereits auf eine Temperatur abgekühlt, die unter der für die Funktion kritischen Temperatur des elastomeren Materials der Dichtlippen 22 liegt. Die Muffe 2 und der Trägerkörper 11 werden ständig von außen her durch die kühle Umgebungsluft gekühlt. Dieser Kühlvorgang kann noch dadurch intensiviert werden, daß der Trägerkörper 11 unterhalb der Stützrippen 15 eine Mehrzahl von - nicht gezeigten - Durchbrüchen aufweist.

Die Ausführungsform der Lippendichtung 10' gemäß Fig. 2 unterscheidet sich von derjenigen gemäß Fig. 1 dadurch, daß der Trägerkörper 11' sich nur etwa über die halbe Höhe der Muffe 2' erstreckt und an seinem unteren Ende ohne einen mit der Muffe 2' in Formschluß tretenden Halterand abschließt. Weiterhin ist bei dieser Ausführungsform der Stützsteg 20' so breit gehalten, daß er über den oberen Muffenrand 16' hinweg radial nach innen etwas vorspringt. Sollte es aus Toleranzgründen zu einer Verengung des Ringspalts 6' kommen, die zu einer Anlage des Stützstegs 20' an der Außenfläche des Spitzendes 3' führt, so ist dies unschädlich, weil der Stützsteg 20' beim Einschiebevorgang nach unten abgebogen und gegebenenfalls auch etwas nach außen gedrückt wird, so daß er zusätzlich abdichtend wirkt.

Im Rahmen der Erfindung kann von den vorstehend beschriebenen Ausführungsbeispielen abgewichen werden. So können die Querschnitte der Muffenrohr-Abschnitte, die in den Ausführungsbeispielen als kreisrund gedacht sind, auch viereckig oder quadratisch ausgebildet werden. In diesem Fall ist die Gestalt der Lippendichtung entsprechend anzupassen und aus dem "zylindrischen" Trägerkörper wird ein entsprechend "prismatischer" Trägerkörper für die Dichtlippen. Weiterhin kann der zylindrische oder prismatische Trägerkörper aus einzelnen sich achsparallel zu den Muffenrohr-Abschnitten erstreckenden Längsstegen aufgebaut sein, die nur an ihrem oberen Ende mit dem die Dichtlippen tragenden starkwandigen Abschnitt 13 verbunden sind, wenn der Ringspalt durch den Stützsteg 20,20' bereits am oberen Muffenrand hinreichend abgedichtet ist. Auf diese Weise können die Längsstege des Trägerkörpers beim Aufsteckvorgang leichter elastisch ausgelenkt werden. Diese Längsstege können mit gegenseitigen Abständen, gegebenenfalls gleichmäßig auf dem Umfang des Stützsteges 20,20' verteilt, angeordnet sein, um dadurch die erwähnten Durchbrüche zur Intensivierung der Außenkühlung der Muffe zu erzielen. Sofern der Trägerkörper aus Halterungs- und Stabilitätsgründen die Muffenaußenwand weitgehend überdeckt, kann zum Zweck einer Intensivierung der Kühlung der Muffe daran gedacht sein, auf der Außenseite des Trägerkörpers eine Reihe von Kühlrippen anzuordnen, die vorzugsweise axial und parallel zueinander verlaufen. Hierdurch wird die Muffe über den Trägerkörper einigermaßen kühl gehalten, auch wenn dieser keine oder nur kleine Durchbrüche aufweist. Die Kühlrippen können in ihren Abmessungen zugleich im Hinblick auf eine gewünschte Biegesteifigkeit des Trägerkörpers ausgelegt sein, wenn diese zur Erleichterung des Aufsteck- oder Aufschiebevorgangs der Lippendichtung erwünscht ist.

Auch der Stützsteg 20,20', der als Anschlag auf dem oberen Muffenrand dient, braucht nicht durchgehend ringförmig ausgebildet zu sein, wenn der Ringspalt durch den Befestigungsabschnitt 12,12' durch dessen dichtende Anlage an der Muffenaußenwand oder durch die Stützrippen 15,15' hinreichend abgedichtet ist. Dann kann der Stützsteg durch nur örtlich und gegebenenfalls gleichförmig auf dem Umfang verteilte, nach innen ragende Vorsprünge gebildet sein. Für die angestrebte Begrenzungs- und Anschlagwirkung reichen drei oder vier derartiger Radialvorsprünge aus. Soll der Stützsteg hingegen die alleinige Abdichtung des Ringspalts übernehmen, so kann daran gedacht sein, auf seiner Unterseite, vorzugsweise nahe dem Übergang zum Trägerkörper, eine oder mehrere feine Dichtlippen vorzusehen, die auf dem oberen Muffenrand aufliegen.

Schließlich kann auf Stützrippen 15, 15' in dem Befestigungsteil 12, 12' vollständig verzichtet werden, sofern entweder durch entsprechende Abstimmung der Bemessung für einen hinreichenden Kraft- bzw. Reibschluß gesorgt ist. Der Trägerkörper 10,10'braucht auch nicht durchgehend zylindrisch oder prismatisch ausgeführt zu sein. So kann insbesondere der die Dichtlippen tragende Abschnitt zu seinem oberen Rand hin tulpenförmig oder konisch erweitert sein, wodurch - insbesondere bei der Wahl eines steiferen Materials der Lippendichtung - der Vorgang des Einfügens des Spitzendes erleichtert wird. Schließlich kann auch daran gedacht werden, die Dichtlippen selbst wiederum als Träger für kleinere Dichtlippen auszugestalten, das heißt in der Nähe des freien Randes der Dichtlippen von deren oberer Fläche abstehende feinere Dichtlippen vorzusehen, die aufgrund der Verformung der Dichtlippen zusätzlich zu diesen oder ausschließlich mit dem Spitzende 3 in Dichtkontakt gelangen. Bezüglich der radialen Erstreckung der Dichtlippen und der eine Abdichtfunktion entfaltenden Stützrippen gilt selbstverständlich allgemein, daß diese bei jeder im Rahmen der Herstellungstoleranzen auftretenden Breite des Ringspalts eine hinreichend abdichtende flächige Anlage der Dichtlippen an dem Spitzende bzw. an der Muffenaußenwand gewährleisten.

## Patentansprüche

1. Rauchrohr eines Kamins, das aus insbesondere keramischen Muffenrohr-Abschnitten (1,1') aufgebaut ist und bei dem die Verbindungsstelle von jeweils zwei aufeinander folgenden Muffenrohr-Abschnitten durch eine Lippendichtung (10,10') aus einem elastomeren Material abgedichtet ist, welche einen die Muffe außen umgreifenden Trägerkörper (11,11') aufweist, der an einem über den oberen Muffenrand (16,16') axial überstehenden Abschnitt (13) mindestens eine an der Außenfläche des in die Muffe (2,2') eingefügten nächstfolgenden Muffenrohr-Abschnitts dichtend anliegende Dichtlippe (22) trägt und die Muffe (2, 2') von außen mit Spannung dichtend umschließt.

2. Rauchrohr nach Anspruch 1,
**dadurch gekennzeichnet**,
daß der die Muffen außen umschließende Befestigungsabschnitt (12,12') des Trägerkörpers auf seiner Innenfläche mindestens eine sich auf der Muffenaußenfläche dichtend abstützende Stützrippe (15,15') trägt.

3. Rauchrohr nach Anspruch 2,
**dadurch gekennzeichnet**,
daß die Stützrippe ringförmig umlaufend ausgebildet ist.

4. Rauchrohr nach Anspruch 3,
**dadurch gekennzeichnet**,
daß die Stützrippe zum oberen Muffenrand (16,16') hin geneigt ist.

5. Rauchrohr nach einem der Ansprüche 1 bis 4,
**dadurch gekennzeichnet**,
daß der Trägerkörper einen nach innen vorspringenden, auf dem oberen Muffenrand (16,16') dichtend aufliegenden Stützsteg (20,20') aufweist.

6. Rauchrohr nach Anspruch 5,
**dadurch gekennzeichnet**,
daß Stützrippen achsparallel zur Längsachse des Muffenrohr-Abschnitts verlaufen.

7. Rauchrohr nach Anspruch 6,
**dadurch gekennzeichnet**,
daß Stützrippen schraubenförmig in Bezug auf die Längsachse des Muffenrohr-Abschnitts verlaufen.

8. Rauchrohr nach Anspruch 5,
**dadurch gekennzeichnet**,
daß der Stützsteg zu seinem freien Rand hin verjüngt ist.

9. Rauchrohr nach Anspruch 5,
**dadurch gekennzeichnet**,
daß der Stützsteg durch auf dem Innenumfang des Trägerkörpers verteilt angeordnete Vorsprünge gebildet ist.

10. Rauchrohr nach einem der Ansprüche 1 bis 9,
**dadurch gekennzeichnet**,
daß der die Dichtlippe bzw. Dichtlippen tragende Abschnitt (13) des Trägerkörpers (11,11') eine größere Wandstärke als der Befestigungsabschnitt (12,12') des Trägerkörpers aufweist.

11. Rauchrohr nach einem der Ansprüche 1 bis 10,
**dadurch gekennzeichnet**,
daß die mindestens eine Dichtlippe (22) zu dem Muffengrund (4,4') hin geneigt ist.

12. Rauchrohr nach einem der Ansprüche 1 bis 11,
**dadurch gekennzeichnet**,
daß der Trägerkörper (11,11') zylindrisch ist.

13. Rauchrohr nach einem der Ansprüche 1 bis 11,
**dadurch gekennzeichnet**,
daß der Trägerkörper prismatisch ausgebildet ist und die Kontur der Dichtlippe der Querschnittsform des Trägerkörpers und der Muffe angepaßt ist.

14. Rauchrohr nach einem der Ansprüche 5 bis 13,
**dadurch gekennzeichnet**,
daß der Trägerkörper (11,11') in seinem Befestigungsabschnitt (12,12') Durchbrüche aufweist, in welchen die Muffenaußenfläche freiliegt.

15. Rauchrohr nach einem der Ansprüche 5 bis 14,
**dadurch gekennzeichnet**,
daß der Trägerkörper durch axial gerichtete Längsstege gebildet ist, die an ihrem einen Ende mit dem die Dichtlippe (22) tragenden Abschnitt (13) verbunden sind.

16. Rauchrohr nach Anspruch 15,
**dadurch gekennzeichnet**,
daß die Längsstege unter Ausbildung gegenseitiger Abstände mit dem Anschlußrand des die Dichtlippe tragenden Abschnitts (13) verbunden sind.

17. Rauchrohr nach einem der Ansprüche 1 bis 16,
**dadurch gekennzeichnet**,
daß der Trägerkörper (11) einen die einspringende Unterfläche (19) der Muffe (2) formschlüssig untergreifenden Halterand (18) aufweist.

18. Rauchrohr nach einem der Ansprüche 1 bis 17,
**dadurch gekennzeichnet**,
daß der die Dichtlippe bzw. Dichtlippen tragende Abschnitt des Trägerkörpers zu seinem oberen Rand hin glockenförmig oder konisch erweitert ist.

19. Rauchrohr nach einem der Ansprüche 1, 112 bis 14 und 18, **dadurch gekennzeichnet**,
daß die Lippendichtung mit ihrem Befestigungsabschnitt an die Muffenaußenfläche angeformt, zum Beispiel angegossen ist.

20. Rauchrohr nach einem der Ansprüche 1 bis 19,
**dadurch gekennzeichnet**,
daß bei zu erwartenden besonders hohen Wärmebelastungen zusätzlich zu der Lippendichtung (10,10') zwischen dem Stirnrand des Spitzendes (3,3') und dem Muffengrund (4,4') ein Faserdichtring angeordnet ist.
